# EUROPÄISCHE PATENTANMELDUNG

(11) **EP 3 059 062 A1**
(43) Veröffentlichungstag der Anmeldung: **24.08.2016**
(21) Anmeldenummer: 16152349.3
(22) Anmeldetag: 22.01.2016
(51) Int. Cl.: B29C 33/02, B29C 45/73, B29C 33/04

(54) **TEMPERIERVORRICHTUNG ZUM VARIOTHERMEN ODER KONVENTIONELLEN TEMPERIEREN VON FORMWERKZEUGEN**

(30) Priorität: 20.02.2015 AT 501342015
(71) Anmelder: Zizala Lichtsysteme GmbH, 3250 Wieselburg (AT)
(72) Erfinder: Haselsteiner, Michael, 3261 Steinakirchen (AT)
(74) Vertreter: Patentanwaltskanzlei Matschnig & Forsthuber OG

(57) **Zusammenfassung**

Die Erfindung betrifft eine Temperiervorrichtung (300) zum Temperieren eines Formwerkzeugs (200, 200') für die Kunststoffverarbeitung, wobei die Temperiervorrichtung (300) umfasst: einen ersten Temperierkreis (301) zum Führen zumindest eines Temperiermediums (313, 314), mit einer ersten Temperierkreis-Zufuhrleitung (302) und einer ersten Temperierkreis-Rücklaufleitung (303) zum Anschließen des ersten Temperierkreises (301) an das Formwerkzeug (200, 200'), ein erstes Temperiergerät (305) für ein erstes Temperiermedium (313), das mit dem ersten Temperierkreis (301) verbindbar ist, ein zweites Temperiergerät (308) für ein zweites Temperiermedium (314), das mit dem ersten Temperierkreis (301) verbindbar ist, und eine erste Umschalteinrichtung (311) zum abwechselnden Verbinden des ersten und des zweiten Temperiergeräts (305, 308) mit dem ersten Temperierkreis (301), wobei die Temperiervorrichtung eine zweite Umschalteinrichtung (315) zum Verbinden des zweiten Temperiergeräts (308) mit einem zweiten Temperierkreis (316) aufweist, wobei der zweite Temperierkreis (316) eine zweite Temperierkreis-Zufuhrleitung (317) und eine zweite Temperierkreis-Rücklaufleitung (318) zum Anschließen des zweiten Temperierkreises (316) an das Formwerkzeug (200, 200') aufweist.

## Beschreibung

Die Erfindung betrifft eine Temperiervorrichtung zum Temperieren eines Formwerkzeugs für die Kunststoffverarbeitung, insbesondere eines Formwerkzeugs für eine Spritzgußvorrichtung, wobei in dem Formwerkzeug zumindest ein Temperiermedienkanal zum Durchleiten zumindest eines Temperiermediums vorgesehen ist, wobei die Temperiervorrichtung umfasst: einen ersten Temperierkreis zum Führen zumindest eines Temperiermediums, mit einer ersten Temperierkreis-Zufuhrleitung und einer ersten Temperierkreis-Rücklaufleitung zum Anschließen des ersten Temperierkreises an das Formwerkzeug, ein erstes Temperiergerät für ein erstes Temperiermedium, wobei das erste Temperiergerät über eine erste Temperiergerät-Zufuhrleitung und eine erste Temperiergerät-Rücklaufleitung mit dem ersten Temperierkreis verbindbar ist, ein zweites Temperiergerät für ein zweites Temperiermedium, wobei das zweite Temperiergerät über eine zweite Temperiergerät-Zufuhrleitung und eine zweite Temperiergerät-Rücklaufleitung mit dem ersten Temperierkreis verbindbar ist, und eine erste Umschalteinrichtung zum abwechselnden Verbinden des ersten und des zweiten Temperiergeräts mit dem ersten Temperierkreis, wobei abwechselnd das erste und das zweite Temperiermedium durch den ersten Temperierkreis und durch zumindest einen der zumindest einen Temperiermedienkanäle des Formwerkzeugs führbar sind.

Bei der Spritzgiessverarbeitung von Kunststoffen werden zumeist temperierte Formwerkzeuge eingesetzt, die je nach Kunststoffmaterial und Verfahren auf eine vorgegebene Temperatur temperiert werden. Hierfür werden häufig Formwerkzeuge eingesetzt, die üblicherweise aus zwei Hälften, die eine Kavität bilden, zusammengesetzt sind. Die heiße Kunststoffschmelze wird in diese Kavität hineingespritzt, kühlt in der Form ab und erstarrt. Zur Temperierung der Form sind, in unmittelbarer Nähe zur Kavität, Temperierkanäle ausgebildet, die von Temperiermedien durchlaufen werden. Die Temperiermedien sind typischerweise flüssig, z.B. Wasser oder Öl. Die Temperierung der Form wirkt sich maßgeblich auf die Zykluszeit aus.

Bekannte Verfahren zur Temperierung von Formwerkzeugen umfassen die konventionelle Temperierung und die variotherme Temperierung.

Bei der konventionellen Temperierung erfolgt die Temperierung des Formwerkzeugs mit einem oder mehreren Temperiergeräten bei konstanter (Soll-)Temperatur innerhalb eines und über aufeinander folgende Zyklen. Im eingeschwungenen Zustand muss dabei Wärme abgeführt werden, damit sich das Formwerkzeug infolge des Einspritzens von flüssigem Kunststoff nicht aufheizt (d.h. Temperieren mit Kühlwirkung). In der Produktion hängt die Zykluszeit maßgeblich von der Kühlung der Form ab, d.h. die Zykluszeit verringert sich mit der Effizienz der Kühlung. Die konventionelle Temperierung/Kühlung ist leicht einstellbar, zeichnet sich durch einfache Handhabung und kurze Zykluszeiten (d.h. ohne Nebenzeiten für Aufheizen und Abkühlen der Form) aus und hat sich insbesondere bei dünnwandigen Gußteilen bewährt. Sie hat jedoch den Nachteil, dass sie bei dickwandigen Gußteilen oder Gußteilen mit komplexen Geometrien bzw. minimalen Abmessungen ungünstig ist und zu unerwünschten Qualitätseinbußen führt, z.B. durch unerwünschte vorzeitige Erstarrung/Abkühlung während des Spritzgußvorgangs, wenn die heiße Kunststoffschmelze in der Einspritzphase auf eine relative kühle Formwerkzeugoberfläche trifft.

Dieses Problem der konventionellen Temperierung kann durch eine variotherme Temperierung des Formwerkzeugs umgangen werden. Variotherme Temperierverfahren sind seit langem bekannt und werden in der Praxis häufig eingesetzt. Beim Fluid-Fluid-Verfahren wird wechselweise heißes und kaltes Temperiermedium durch die kavitätsnahen Temperierkanäle des Formwerkzeugs geleitet, um die Temperatur des Formwerkzeugs innerhalb eines Zyklus schnell erhöhen und absenken zu können. Das Einspritzen der Kunststoffschmelze erfolgt dabei bei hoher Temperatur des Formwerkzeugs, wohingegen in der Kühlphase des Temperierzyklus des Formwerkzeugs die Schmelze erstarrt und nach Öffnen des Formwerkzeugs das Gußteil entnommen wird.

Zur variothermen Temperierung von Formwerkzeugen für Spritzgußmaschinen haben sich Temperiervorrichtungen mit zwei Temperiergeräten bewährt, von denen eines auf hoher und eines auf tiefer Temperatur arbeitet, wobei mittels einer Umschalteinrichtung abwechselnd heißes und kaltes Temperiermedium durch die Temperierkanäle des Formwerkzeugs geleitet werden.

Eine eingangs genannte Temperiervorrichtung, bei welcher abwechselnd das eine (heiße) Temperiergerät und das andere (kalte) Temperiergerät mit dem gleichen Temperierkreis verbindbar ist, hat sich als vorteilhaft für die variotherme Temperierung herausgestellt. Da beide Temperiergeräte abwechselnd einen Temperierkreis speisen, wird das heiße Temperiermedium im Formwerkzeug beim Umschalten rasch vom kalten Temperiermedium verdrängt und vice versa. Dies eröffnet einen zusätzlichen Prozessparameter bei kürzest möglichen Nebenzeiten für Aufheizen und Abkühlen. Gleichzeitig kann die Temperiervorrichtung aufgrund ihres einfachen Aufbaus an gängige Formwerkzeuge angeschlossen werden. Die Anschlüsse an das Formwerkzeug sowie die Anordnung, Dimensionierungen und Ausgestaltung der Zu- und Ableitungen der Temperiervorrichtung an das Formwerkzeug sind variabel und hängen unter anderem vom Formwerkzeug selbst, den darin verlaufenden Temperierkanälen und der Art des Gußteils ab. Eine solche bekannte Temperiervorrichtung ist z.B. unter dem Produktnamen Vario-5 des Herstellers HB-Therm erhältlich.

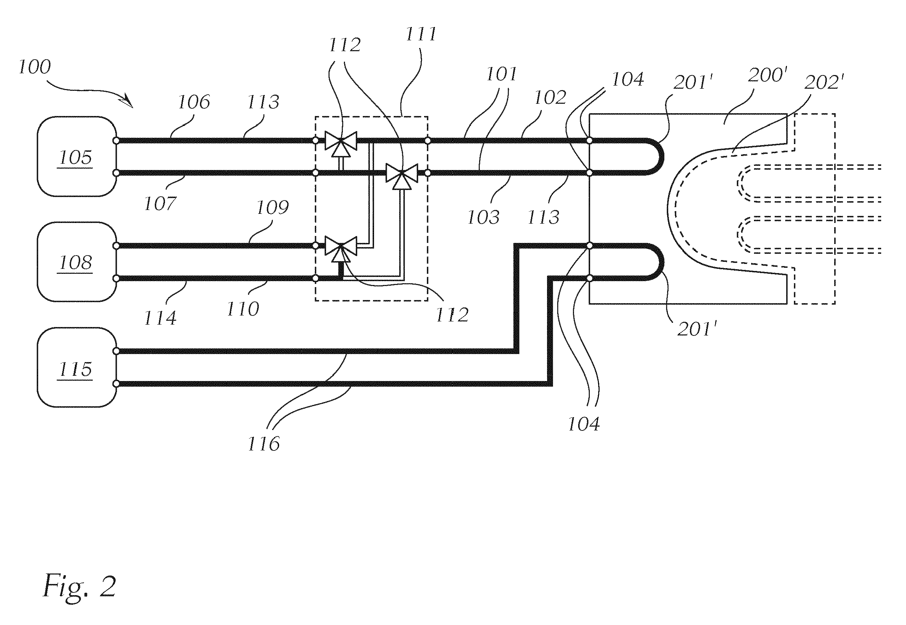

Die eingangs genannte Temperiervorrichtung kann auch für die konventionelle Temperierung bei einer Temperatur eingesetzt werden, hat jedoch den Nachteil, dass aufgrund der konstruktiven Anordnung nur eines der beiden Temperiergeräte (nämlich jenes, das mit dem Temperierkreis verbunden ist) einsatzfähig ist. Das zweite Temperiergerät kann im konventionellen Temperierbetrieb nicht genutzt werden. Um bei der konventionellen Temperierung, bei der es sich wie erwähnt im eingeschwungenen Zustand um Wärmeabfuhr, also Kühlung handelt, eine entsprechende Kühleffizienz und damit eine kurze Zykluszeit zu erreichen, ist es häufig notwendig, weitere zusätzliche Temperiergeräte mit Temperiermedium an das Formwerkzeug anzuschließen, was einen zusätzlichen Geräteaufwand und zusätzliche Kosten hinsichtlich Anschaffung und Betrieb verursacht. Dieser Nachteil der bekannten Temperiervorrichtung ist weiter unten im Zusammenhang mit Fig. 2 dargestellt und näher erläutert.

Es ist daher eine Aufgabe der Erfindung, die eingangs genannte Temperiervorrichtung so zu verbessern, dass eine Nutzung aller in der Temperiervorrichtung vorhandenen Temperiergeräte und somit eine effizientere Gerätenutzung und -auslastung auch im konventionellen Betrieb möglich wird.

Diese Aufgabe wird mit einer Temperiervorrichtung wie eingangs genannt gelöst, welche erfindungsgemäß dadurch gekennzeichnet ist, dass sie eine zweite Umschalteinrichtung zum Verbinden des zweiten Temperiergeräts mit einem zweiten Temperierkreis aufweist, wobei der zweite Temperierkreis eine zweite Temperierkreis-Zufuhrleitung und eine zweite Temperierkreis-Rücklaufleitung zum Anschließen des zweiten Temperierkreises an das Formwerkzeug aufweist.

Dank der Erfindung ist eine effiziente Gerätenutzung einer für den variothermen Betrieb optimierten Temperiervorrichtung auch im konventionellen Betrieb möglich. Die Erfindung ermöglicht einen flexiblen Einsatz der Temperiervorrichtung durch entsprechende Einstellungen der Umschalteinheiten, eine kostengünstige Anlagenbeschaffung und aufgrund der besseren Temperiergerätenutzung einen geringeren Platzbedarf, da im konventionellen Betrieb für das Kühlen weniger zusätzliche Temperiergeräte zugeschaltet werden müssen. Da beide Temperiergeräte für den konventionellen Betrieb zur Verfügung stehen, ermöglicht die erfindungsgemäße Temperiervorrichtung eine verbesserte Kühlleistung und deshalb eine kürzere Zykluszeit in der Produktion.

Die erfindungsgemäße Vorrichtung kann zweckmäßigerweise an verschiedene Formwerkzeuge angeschlossen werden, deren Ausgestaltung vom Kunststoffmaterial, der Gußform (Größe, Wanddickte etc.) des Gußteils, dem eingesetzten Verfahren und anderen dem Fachmann bekannten Parametern abhängen kann. Für den variothermen Betrieb wird sie mit Vorteil an Formwerkzeuge angeschlossen, in denen ein kavitätsnaher Temperiermedienkanal vorgesehen ist, wohingegen sie im konventionellen Betrieb mit Vorteil an ein Formwerkzeug mit zwei oder mehr kavitätsnahen Temperiermedienkanälen angeschlossen wird.

Die Anschlüsse an das Formwerkzeug sowie die Anordnung, Dimensionierungen und Ausgestaltung der Temperiermedium-Zu- und Rücklaufleitungen der Temperiervorrichtung an das Formwerkzeug sind variabel und hängen unter anderem vom Formwerkzeug selbst, den darin verlaufenden Temperierkanälen und der Art des Gußteils ab. Es liegt im Können und Fachwissen eines Fachmanns, die Anschlüsse sowie die Anordnung, Dimensionierungen und Ausgestaltung der Zu- und Rücklaufleitungen entsprechend auszuwählen.

Mit Vorteil sind daher bei einer variothermen Temperierung des Formwerkzeugs die erste Umschalteinrichtung und die zweite Umschalteinrichtung so geschaltet, dass nur der erste Temperierkreis zum abwechselnden Führen des ersten und des zweites Temperiermediums geöffnet ist. Der zweite Temperierkreis wird bei der variothermen Temperierung nicht genutzt und ist folglich für das zweite Temperiermedium geschlossen. Dabei ist es günstig, wenn das erste Temperiergerät das erste Temperiermedium auf eine erste Temperatur temperiert und das zweite Temperiergerät das zweite Temperiermedium auf eine zweite Temperatur temperiert, wobei die erste Temperatur niedriger als die zweite Temperatur ist.

Bei einer konventionellen Temperierung des Formwerkzeugs ist es hingegen vorgesehen, dass die erste Umschalteinrichtung so geschaltet ist, dass der erste Temperierkreis nur für das erste Temperiermedium geöffnet ist, und dass die zweite Umschalteinrichtung so geschaltet ist, dass der zweite Temperierkreis für das zweite Temperiermedium geöffnet ist. Zweckmäßigerweise temperiert das erste Temperiergerät bzw. das zweite Temperiergerät das erste bzw. das zweite Temperiermedium auf dieselbe Temperatur. Das ist jene Temperatur, bei der ein Befüllen der Form und ein anschließendes Erstarren der Schmelze möglich ist.

Bei bestimmten Spritzgußanwendungen ist es möglich, dass die Kühlung des Formwerkzeugs im konventionellen Temperierbetrieb bzw. die Kühlung des Formwerkzeugs während der Kühlphase des variothermen Temperierbetriebs mit den vorhandenen Temperiergeräten nicht ausreicht. Für diese Anwendungen ist es daher von Vorteil, wenn in der Temperiervorrichtung zumindest ein weiterer, zusätzlicher Temperierkreis zum Führen eines weiteren Temperiermediums vorgesehen ist, wobei dieser zusätzliche Temperierkreis über Zufuhr- und Rücklaufleitungen an das Formwerkzeug anschließbar ist und wobei dem zumindest einen zusätzlichen Temperierkreis ein Temperiergerät zugeordnet ist. Dieser zusätzliche Temperierkreis ist in erster Linie zur Erhöhung der Kühlleistung der Temperiervorrichtung im eingeschwungenen Produktionszustand zuschaltbar, kann aber natürlich auch zum Erwärmen des Formwerkzeugs auf Solltemperatur eingesetzt werden.

Die eingesetzten und hierin beschriebenen Temperiermedien sind normalerweise flüssig; typischerweise handelt es sich dabei um wässrige Medien, z.B. Wasser, oder um Öl. Dementsprechend ist die Temperiervorrichtung nach hinlänglich bekannter Art zum Temperieren flüssiger Temperiermedien (Heizflüssigkeit, Kühlflüssigkeit) eingerichtet und ausgestaltet.

Die Dimensionierung der Temperiergeräte, der Leitungen und anderer an sich bekannter Bauteile wie z.B. Ventile und Pumpen hängt von der jeweiligen Anwendung ab und liegt im Können und Ermessen des einschlägigen Fachmanns.

Die Umschalteinheiten umfassen zweckmäßigerweise Ventile, die dem gewünschten Temperierbetrieb und -verfahren entsprechend geschaltet sind. Bei den Ventilen kann es sich beispielsweise um Magnetventile handeln, die zweckmäßigerweise nach an sich bekannter Art durch eine der Temperiervorrichtung zugeordnete Steuereinheit wie unten beschrieben steuer- und regelbar sind.

Ferner ist es besonders für den variothermen Betrieb, bei dem die Temperiermedienkanäle des Formwerkzeugs stets im Wechsel von heißem und kalten Wasser durchströmt werden, von Vorteil, wenn in der Temperiervorrichtung ein erster Speicher für das erste Temperiermedium und ein zweiter Speicher für das zweite Temperiermedium vorgesehen sind. Dadurch kann das Spritzgussverfahren bei variothermer Temperierung des Formwerkzeugs energiesparend und mit kürzeren Zykluszeiten betrieben werden. Beispielsweise sind die Speicher integrale Bauteile der Temperiergeräte.

Die erfindungsgemäße Temperiervorrichtung arbeitet zweckmäßigerweise vollautomatisch. Dementsprechend umfasst sie eine Steuereinheit, die zu ihrer programmierten Steuerung eingerichtet ist. Die Steuereinheit ermöglicht einen vollautomatischen Betrieb und eine vollautomatische Überwachung des Temperierprozesses und ist nach an sich bekannter Art aufgebaut; typischerweise weist sie einen Mikrokontroller sowie elektronische Bauteile auf. Ist die Temperiervorrichtung ein integraler Bestandteil einer Spritzgussanlage, dann kann - alternativ dazu - die Steuerung der Temperiervorrichtung auch durch die Steuereinheit der Spritzgussanlage erfolgen.

Im Folgenden wird die Erfindung samt weiteren Vorzügen anhand eines nicht einschränkenden Ausführungsbeispiels, das in den beigefügten Zeichnungen dargestellt ist, näher erläutert. Die Zeichnungen zeigen:
Fig. 1 eine schematische Darstellung einer Temperiervorrichtung gemäß dem Stand der Technik im variothermen Temperierungsbetrieb, wobei Fig. 1a die Kühlphase und Fig. 1b die Heizphase der variothermen Temperierung zeigt,
Fig. 2 die Temperiervorrichtung gemäß dem Stand der Technik aus Fig. 1 im konventionellen Temperierbetrieb (Kühlung),
Fig. 3 eine schematische Darstellung einer erfindungsgemäßen Temperiervorrichtung im konventionellen Temperierbetrieb (Kühlung), und
Fig. 4 die erfindungsgemäße Temperiervorrichtung aus Fig. 3 im variothermen Temperierbetrieb, wobei Fig. 4a die Heizphase und Fig. 4b die Kühlphase der variothermen Temperierung zeigt.

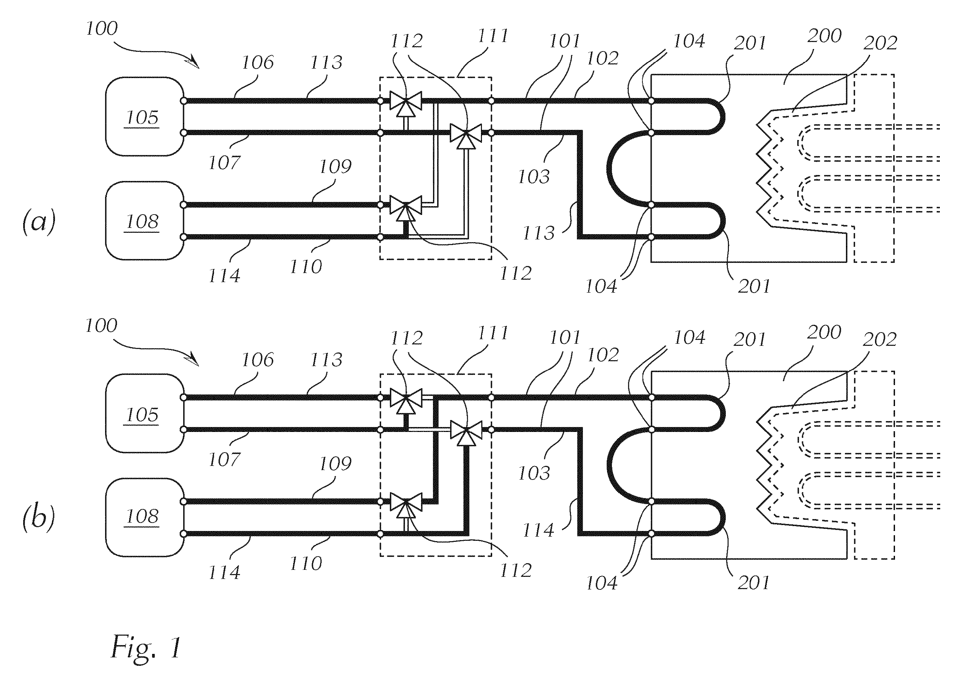

Fig. 1 zeigt eine schematische Darstellung einer Temperiervorrichtung 100 gemäß dem Stand der Technik (z.B. das Temperiergerät Vario-5 des Herstellers HB-Therm) im variothermen Temperierungsbetrieb, wobei in Fig. 1a die Kühlphase und in Fig. 1b die Heizphase der variothermen Temperierung dargestellt ist. Die Temperiervorrichtung 100 weist einen ersten Temperierkreis 101 mit einer ersten Temperierkreis-Zufuhrleitung 102 und einer ersten Temperierkreis-Rücklaufleitung 103 auf. Die Zufuhr- und Rücklaufleitungen 102, 103 sind über Anschlüsse 104 an Temperiermedienkanäle 201 einer Hälfte eines zweiteiligen Formwerkzeugs 200 einer nicht näher dargestellten Spritzgussmaschine angeschlossen. Das Formwerkzeug 200 ist zur variothermen Temperierung ausgelegt. Die andere Hälfte des Formwerkzeugs 200 und die darin verlaufenden Temperiermedienkanäle sind strichliert dargestellt. Zwischen den beiden Hälften des Formwerkzeugs 200 wird eine Kavität 202 gebildet, in welche die Kunststoffschmelze eingespritzt wird.

Die Temperiervorrichtung 100 umfasst ein erstes Temperiergerät 105 für ein erstes Temperiermedium 113, wobei das erste Temperiergerät 105 über eine erste Temperiergerät-Zufuhrleitung 106 und eine erste Temperiergerät-Rücklaufleitung 107 mit dem ersten Temperierkreis 101 verbindbar ist.

Die Temperiervorrichtung 100 umfasst ferner ein zweites Temperiergerät 108 für ein zweites Temperiermedium 114, wobei das zweite Temperiergerät 108 über eine zweite Temperiergerät-Zufuhrleitung 109 und eine zweite Temperiergerät-Rücjlaufleitung 110 ebenfalls mit dem ersten Temperierkreis 101 verbindbar ist.

Die Temperiervorrichtung 100 umfasst darüber hinaus eine Umschalteinrichtung 111, mit der das erste und das zweite Temperiergerät 105, 108 für die variotherme Temperierung abwechselnd mit dem ersten Temperierkreis 101 verbunden werden, d.h. es wird wechselweise kaltes und heißes Temperiermedium 113,114 durch die kavitätsnahen Temperierkanäle 201 des Formwerkzeugs 200 geleitet. Hierfür umfasst die Umschalteinrichtung Ventile 112, die bei entsprechender Schaltung entweder das erste oder das zweite Temperiergerät 105, 108 mit dem ersten Temperierkreis 101 verbinden. Im gezeigten Beispiel umfasst die Umschalteinrichtung 111 drei Ventile 112; ein Fachmann auf dem Gebiet ist jedoch aufgrund seines Wissens und Könnens in der Lage, eine andere Ventilanordnung oder Anzahl vorzusehen. Im gezeigten Beispiel ist das erste (kalte) Temperiergerät 105 für die Temperierung des kalten Temperiermediums 113 (Kühlmittel 113) und das zweite (heiße) Temperiergerät 108 für die Temperierung des heißen Temperiermediums 114 (Heizmittel 114) während des variothermen Betriebs vorgesehen. Das Einspritzen der Kunststoffschmelze in die Kavität 202 des Formwerkzeugs 200 erfolgt dabei nach an sich bekannter Art bei hoher Temperatur des Formwerkzeugs 200 in der Heizphase (siehe Fig. 1b), wohingegen in der Kühlphase (siehe Fig. 1a) das Formwerkzeug 200 gekühlt wird.

Fig. 1a zeigt die Temperiervorrichtung 100 anhand des Flusses des Heizmittels 114 bzw. des Kühlmittels 113 während der Kühlphase. In der Kühlphase sind die Ventile 112 der Umschalteinrichtung 111 so geschaltet, dass der erste Temperierkreis 101 für das Heizmittel 114 geschlossen und für das Kühlmittel 113 geöffnet ist. Das Heizmittel 114 wird während der Kühlphase im Kreis geführt und kann in einem im Temperiergerät 108 angeordneten, nicht näher dargestellten Speicher bis zur Einleitung der Heizphase gespeichert werden.

Fig. 1b zeigt die Temperiervorrichtung 100 anhand des Flusses des Heizmittels 114 bzw. des Kühlmittels 113 während der Heizphase. In der Heizphase sind die Ventile 112 der Umschalteinrichtung 111 so geschaltet, dass der erste Temperierkreis 101 für das Heizmittel 114 geöffnet und für das Kühlmittel 113 geschlossen ist. Das Kühlmittel 113 wird während der Heizphase im Kreis geführt und kann in einem im Temperiergerät 105 angeordneten, nicht näher dargestellten Speicher bis zur Einleitung der Kühlphase gespeichert werden.

Fig. 2 zeigt die Temperiervorrichtung aus Fig. 1 im konventionellen Temperierbetrieb, bei dem ein Formwerkzeug 200' im Gegensatz zum variothermen Temperierbetrieb (Fig. 1) nur bei einer Temperatur temperiert wird. Das Formwerkzeug 200' ist zur konventionellen Temperierung ausgelegt. Die Zufuhr- und Rücklaufleitungen 102, 103 sind über Anschlüsse 104 an Temperiermedienkanäle 201' einer Hälfte des zweiteiligen Formwerkzeugs 200' einer nicht näher dargestellten Spritzgussmaschine angeschlossen. Die andere Hälfte des Formwerkzeugs 200' und die darin verlaufenden Temperiermedienkanäle sind wiederum strichliert dargestellt. Zwischen den beiden Hälften des Formwerkzeugs 200' wird eine Kavität 202' gebildet, in welche die Kunststoffschmelze eingespritzt wird. Üblicherweise wird die gewählte Temperatur näher bei der niedrigeren Temperatur des Variothermbetriebs liegen, wie in Fig.2 gezeigt. Hierfür sind die Ventile 112 der Umschalteinrichtung 111 so geschaltet, dass der erste Temperierkreis 101 für das Heizmittel 114 geschlossen und für das Kühlmittel 113 geöffnet ist und nur das Temperiergerät 105 in Betrieb ist. Das zweite Temperiergerät 108 kann im konventionellen Temperierbetrieb nicht verwendet werden. Um die Kühleffizienz zum Erreichen kurzer Zykluszeiten zu erhöhen, muss daher ein zusätzliches Temperiergerät 115 mittels Zufuhr- und Rücklaufleitungen 116 an das Formwerkzeug 200' angeschlossen werden. Wie aus der Fig. 2 gut ersichtlich ist, kann mit dem Temperiergerät 100 nach dem Stand der Technik im konventionellen Temperierbetrieb keine zufriedenstellende Gerätenutzung, d.h. eine Nutzung aller vorhandenen Geräte, erreicht werden, so dass für die Erhöhung der Kühleffizienz das Zuschalten zusätzlicher Temperiergeräte notwendig ist.

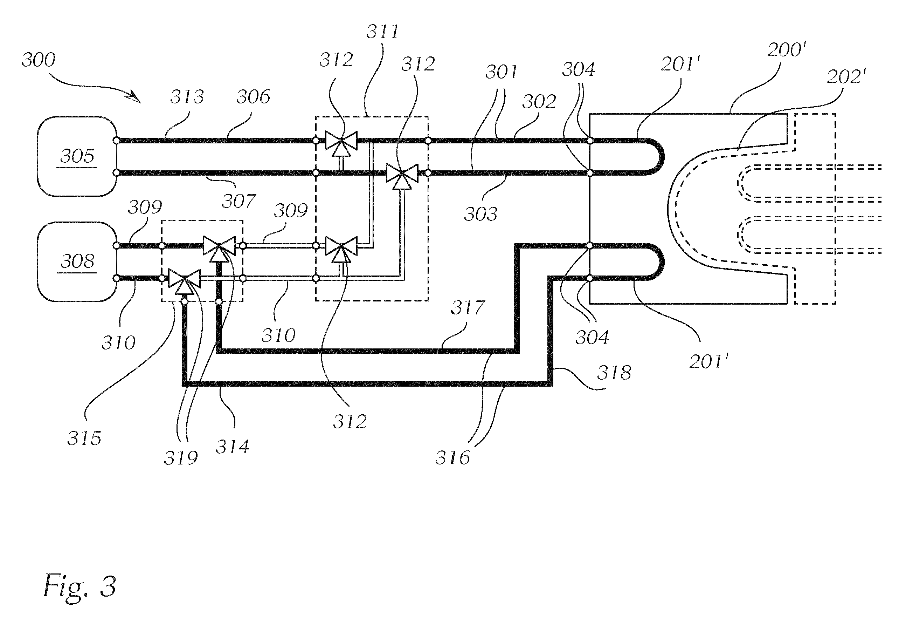

Fig. 3 zeigt eine schematische Darstellung einer erfindungsgemäßen Temperiervorrichtung 300 im konventionellen Temperierbetrieb (Kühlung).

Die Temperiervorrichtung 300 weist einen ersten Temperierkreis 301 mit einer ersten Temperierkreis-Zufuhrleitung 302 und einer ersten Temperierkreis-Rücklaufleitung 303 auf. Die Zufuhr- und Rücklaufleitungen 302, 303 sind über Anschlüsse 304 an Temperiermedienkanäle 201' einer Hälfte eines zweiteiligen Formwerkzeugs 200' einer nicht näher dargestellten Spritzgussmaschine angeschlossen. Das Formwerkzeug 200' ist zur konventionellen Temperierung ausgelegt. Die andere Hälfte des Formwerkzeugs 200' und die darin verlaufenden Temperiermedienkanäle sind strichliert dargestellt. Zwischen den beiden Hälften des Formwerkzeugs 200' wird eine Kavität 202' gebildet, in welche die Kunststoffschmelze eingespritzt wird. Üblicherweise wird das Formwerkzeug 200' im konventionellen Temperierbetrieb, so wie in Fig. 3 gezeigt, gekühlt.

Die Temperiervorrichtung 300 umfasst ein erstes Temperiergerät 305 für ein erstes Temperiermedium 313, wobei das erste Temperiergerät 305 über eine erste Temperiergerät-Zufuhrleitung 306 und eine erste Temperiergerät-Rücklaufleitung 307 mit dem ersten Temperierkreis 301 verbindbar ist.

Die Temperiervorrichtung 300 umfasst ferner ein zweites Temperiergerät 308 für ein zweites Temperiermedium 314, wobei das zweite Temperiergerät 308 über eine zweite Temperiergerät-Zufuhrleitung 309 und eine zweite Temperiergerät-Rücklaufleitung 310 ebenfalls mit dem ersten Temperierkreis 301 verbindbar ist.

Die Temperiervorrichtung 300 umfasst darüber hinaus eine erste Umschalteinrichtung 311, mit der entweder das erste oder das zweite Temperiergerät 305, 308 mit dem ersten Temperierkreis 301 verbindbar ist. Hierfür umfasst die erste Umschalteinrichtung Ventile 312, die bei entsprechender Schaltung entweder das erste oder das zweite Temperiergerät 305, 308 mit dem ersten Temperierkreis 301 verbinden. Im gezeigten Beispiel umfasst die erste Umschalteinrichtung 311 drei Ventile 312; ein Fachmann auf dem Gebiet ist jedoch aufgrund seines Wissens und Könnens in der Lage, eine andere Ventilanordnung oder Anzahl vorzusehen.

Erfindungsgemäß umfasst die Temperiervorrichtung eine zweite Umschalteinrichtung 315, mit der das zweite Temperiergerät 308 mit einem zweiten Temperierkreis 316 verbindbar ist, wobei der zweite Temperierkreis 316 eine zweite Temperierkreis-Zufuhrleitung 317 und eine zweite Temperierkreis-Rücklaufleitung 318 aufweist. Die Zufuhr- und Rücklaufleitungen 317, 318 sind ebenfalls über Anschlüsse 304 an die Temperiermedienkanäle 201' des zweiteiligen Formwerkzeugs 200' anschließbar. Die zweite Umschalteinrichtung 315 umfasst zwei Ventile 319, die bei entsprechender Schaltung das zweite Temperiergerät 308 entweder mit dem ersten Temperierkreis 301 oder mit dem zweiten Temperierkreis 316 verbinden können. Im gezeigten Beispiel umfasst die zweite Umschalteinrichtung zwei Ventile 319; ein Fachmann auf dem Gebiet ist jedoch aufgrund seines Wissens und Könnens in der Lage, eine andere Ventilanordnung oder Anzahl vorzusehen.

Bei den Ventilen 312, 319 kann es sich beispielsweise um Magnetventile handeln, die zweckmäßigerweise nach an sich bekannter Art durch eine der Temperiervorrichtung 300 zugeordnete Steuereinheit wie unten beschrieben steuer- und regelbar sind.

Für die konventionelle Temperierung (nur Kühlung) des Formwerkzeugs 200', wie sie in Fig. 3 dargestellt ist, sind die Ventile 312 bzw. 319 der ersten Umschalteinrichtung 311 bzw. der zweiten Umschalteinrichtung 315 so geschaltet, dass der erste Temperierkreis 301 für das Temperiermedium 314 geschlossen und für das Temperiermedium 313 geöffnet ist und dass der zweite Temperierkreis 316 für das zweite Temperiermedium 314 geöffnet ist d.h. es ist nur das Temperiergerät 305 mit dem ersten Temperierkreis 301 verbunden und das zweite Temperiergerät 308 ist mit dem zweiten Temperierkreis 316 verbunden. Wie aus der Fig. 3 klar ersichtlich ist, kann im Gegensatz zum Stand der Technik (Fig. 1 und Fig. 2) bei der erfindungsgemäßen Temperiervorrichtung 300 auch das Temperiergerät 308 genutzt werden und ermöglicht somit eine maximale Ausnutzung der Temperiergeräte 305, 308.

Für den Fall, dass darüber hinaus Temperiergeräte (abhängig von der eingesetzten Form) benötigt werden, können auch bei der erfindungsgemäßen Vorrichtung 300 noch ein oder mehr zusätzliche Temperiergeräte an das Formwerkzeug 200' angeschlossen werden, zum Beispiel ein Temperiergerät 115 wie in der Fig. 2 gezeigt. Aus Gründen der besseren Darstellbarkeit ist ein solches zusätzliches Temperiergerät 115 jedoch nicht in Fig. 3 eingezeichnet.

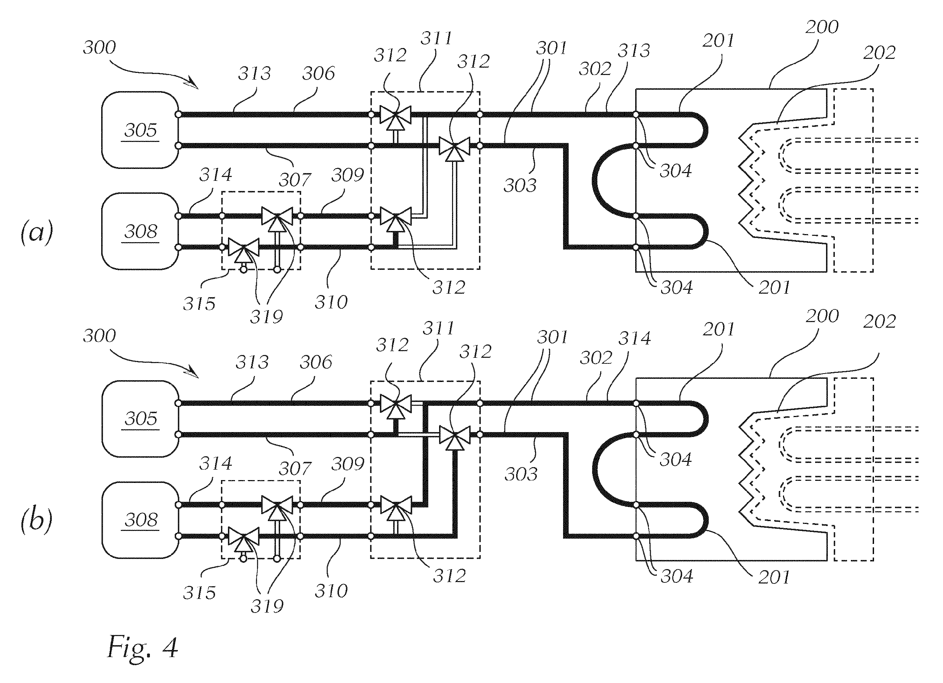

Fig. 4 zeigt die erfindungsgemäße Temperiervorrichtung aus Fig. 3 im variothermen Temperierbetrieb, wobei Fig. 4a die Kühlphase und Fig. 4b die Heizphase der variothermen Temperierung zeigt. Die Zufuhr- und Rücklaufleitungen 302, 303 des ersten Temperierkreises 301 sind über Anschlüsse 304 an Temperiermedienkanäle 201 einer Hälfte eines zweiteiligen Formwerkzeugs 200 einer nicht näher dargestellten Spritzgussmaschine angeschlossen. Das Formwerkzeug 200 ist zur variothermen Temperierung ausgelegt. Die andere Hälfte des Formwerkzeugs 200 und die darin verlaufenden Temperiermedienkanäle sind strichliert dargestellt. Zwischen den beiden Hälften des Formwerkzeugs 200 wird eine Kavität 202 gebildet, in welche die Kunststoffschmelze eingespritzt wird. In Fig. 4 ist das erste (kalte) Temperiergerät 305 für die Temperierung des kalten Temperiermediums 313 (Kühlmittel 313) und das zweite (heiße) Temperiergerät 308 für die Temperierung des heißen Temperiermediums 314 (Heizmittel 314) während des variothermen Betriebs vorgesehen. Das Einspritzen der Kunststoffschmelze in die Kavität 202 des Formwerkzeugs 200 erfolgt dabei nach an sich bekannter Art bei hoher Temperatur des Formwerkzeugs 200 in der Heizphase (siehe Fig. 4b), wohingegen in der Kühlphase (siehe Fig. 4a) das Formwerkzeug 200 gekühlt wird.

Bei der in Fig. 4 gezeigten variothermen Temperierung des Formwerkzeugs 200 sind die erste und die zweite Umschalteinrichtungen 311, 315 der Vorrichtung 300 so geschaltet, dass nur der erste Temperierkreis 301 zum abwechselnden Führen des ersten und des zweites Temperiermediums 313, 314 geöffnet ist, wohingegen der zweite Temperierkreis 316 für das zweite Temperiermedium 314 geschlossen ist. In anderen Worten ausgedrückt, werden die Temperiergeräte 305 bzw. 308 alternierend mit dem ersten Temperierkreis 301 verbunden. Das zweite Temperiergerät 308 ist von dem zweiten Temperierkreis 316 abgekoppelt. So wie in den Fig. 4a und 4b gezeigt wird auch in der praktischen Umsetzung der zweite Temperierkreis 316 bei der variothermen Temperierung weggelassen bzw. nicht an das Formwerkzeug angeschlossen. Bei der variothermen Temperierung wird somit nach bekannter Art und Weise wechselweise heißes und kaltes Temperiermedium 313, 314 durch die kavitätsnahen Temperierkanäle 201 des Formwerkzeugs 200 geleitet.

Fig. 4a zeigt die Temperiervorrichtung 300 anhand des Flusses des Heizmittels 314 bzw. des Kühlmittels 313 während der Kühlphase. In der Kühlphase sind die Ventile 312 der Umschalteinrichtung 311 so geschaltet, dass der erste Temperierkreis 301 für das Heizmittel 314 geschlossen und für das Kühlmittel 313 geöffnet ist. Das Heizmittel 314 wird während der Kühlphase im Kreis geführt und kann in einem im Temperiergerät 308 angeordneten, nicht näher dargestellten Speicher bis zur Einleitung der Heizphase gespeichert werden.

Fig. 4b zeigt die Temperiervorrichtung 300 anhand des Flusses des Heizmittels 314 bzw. des Kühlmittels 313 während der Heizphase. In der Heizphase sind die Ventile 312 der Umschalteinrichtung 311 so geschaltet, dass der erste Temperierkreis 301 für das Heizmittel 314 geöffnet und für das Kühlmittel 313 geschlossen ist. Das Kühlmittel 313 wird während der Heizphase im Kreis geführt und kann in einem im Temperiergerät 305 angeordneten, nicht näher dargestellten Speicher bis zur Einleitung der Kühlphase gespeichert werden.

Die erfindungsgemäße Temperiervorrichtung 300 arbeitet zweckmäßigerweise vollautomatisch. Dementsprechend umfasst sie nach an sich bekannter Art eine nicht näher dargestellte Steuereinheit, die zu ihrer programmierten Steuerung eingerichtet ist. Die Steuereinheit ermöglicht einen vollautomatischen Betrieb und eine vollautomatische Überwachung des Temperierprozesses und ist nach an sich bekannter Art aufgebaut; typischerweise weist sie einen Mikrokontroller sowie elektronische Bauteile auf. Ist die Temperiervorrichtung 300 ein integraler Bestandteil einer Spritzgussanlage, dann kann - alternativ dazu - die Steuerung der Temperiervorrichtung auch durch die Steuereinheit der Spritzgussanlage erfolgen.

## Patentansprüche

1. Temperiervorrichtung (300) zum Temperieren eines Formwerkzeugs (200, 200') für die Kunststoffverarbeitung, insbesondere eines Formwerkzeugs (200, 200') für eine Spritzgußvorrichtung, wobei in dem Formwerkzeug (200, 200') zumindest ein Temperiermedienkanal (201, 201') zum Durchleiten zumindest eines Temperiermediums (313, 314) vorgesehen ist, wobei die Temperiervorrichtung (300) umfasst:
einen ersten Temperierkreis (301) zum Führen zumindest eines Temperiermediums (313, 314), mit einer ersten Temperierkreis-Zufuhrleitung (302) und einer ersten Temperierkreis-Rücklaufleitung (303) zum Anschließen des ersten Temperierkreises (301) an das Formwerkzeug (200,200'),
ein erstes Temperiergerät (305) für ein erstes Temperiermedium (313), wobei das erste Temperiergerät (305) über eine erste Temperiergerät-Zufuhrleitung (306) und eine erste Temperiergerät-Rücklaufleitung (307) mit dem ersten Temperierkreis (301) verbindbar ist,
ein zweites Temperiergerät (308) für ein zweites Temperiermedium (314), wobei das zweite Temperiergerät (308) über eine zweite Temperiergerät-Zufuhrleitung (309) und eine zweite Temperiergerät-Rücklaufleitung (310) mit dem ersten Temperierkreis (301) verbindbar ist, und
eine erste Umschalteinrichtung (311) zum abwechselnden Verbinden des ersten und des zweiten Temperiergeräts (305, 308) mit dem ersten Temperierkreis (301), wobei abwechselnd das erste und das zweite Temperiermedium (313, 314) durch den ersten Temperierkreis (301) und durch zumindest einen der zumindest einen Temperiermedienkanäle (201, 201') des Formwerkzeugs (200,201') führbar sind,
**gekennzeichnet durch**
eine zweite Umschalteinrichtung (315) zum Verbinden des zweiten Temperiergeräts (308) mit einem zweiten Temperierkreis (316), wobei der zweite Temperierkreis (316) eine zweite Temperierkreis-Zufuhrleitung (317) und eine zweite Temperierkreis-Rücklaufleitung (318) zum Anschließen des zweiten Temperierkreises (316) an das Formwerkzeug (200, 200') aufweist.

2. Temperiervorrichtung nach Anspruch 1, **dadurch gekennzeichnet, dass** bei einer variothermen Temperierung des Formwerkzeugs (200) die erste Umschalteinrichtung (311) und die zweite Umschalteinrichtung (315) so geschaltet sind, dass nur der erste Temperierkreis (301) zum abwechselnden Führen des ersten und des zweites Temperiermediums (313, 314) geöffnet ist.

3. Temperiervorrichtung nach Anspruch 2, **dadurch gekennzeichnet, dass** das erste Temperiergerät (305) das erste Temperiermedium (313) auf eine erste Temperatur temperiert und das zweite Temperiergerät (308) das zweite Temperiermedium (314) auf eine zweite Temperatur temperiert, wobei die erste Temperatur niedriger als die zweite Temperatur ist.

4. Temperiervorrichtung nach Anspruch 1, **dadurch gekennzeichnet, dass** bei einer konventionellen Temperierung des Formwerkzeugs (200') die erste Umschalteinrichtung (311) so geschaltet ist, dass der erste Temperierkreis (301) nur für das erste Temperiermedium (313) geöffnet ist und dass die zweite Umschalteinrichtung (315) so geschaltet ist, dass der zweite Temperierkreis (316) für das zweite Temperiermedium (314) geöffnet ist.

5. Temperiervorrichtung nach Anspruch 4, **dadurch gekennzeichnet, dass** das erste Temperiergerät (305) bzw. das zweite Temperiergerät (308) das erste bzw. das zweite Temperiermedium (313,314) auf dieselbe Temperatur temperiert.

6. Temperiervorrichtung nach einem der Ansprüche 1 bis 5, **dadurch gekennzeichnet, dass** zumindest ein weiterer Temperierkreis (116) zum Führen eines weiteren Temperiermediums vorgesehen ist, wobei der Temperierkreis (116) über Zufuhr- und Rücklaufleitungen an das Formwerkzeug anschließbar ist und wobei dem Temperierkreis ein Temperiergerät (115) zugeordnet ist.

7. Temperiervorrichtung nach einem der Ansprüche 1 bis 6, **dadurch gekennzeichnet, dass** sie zum Temperieren flüssiger Temperiermedien (313, 314) eingerichtet ist.

8. Temperiervorrichtung nach einem der Ansprüche 1 bis 7, **dadurch gekennzeichnet, dass** die Umschalteinrichtungen (311, 315) Ventile (312, 319) umfassen.

9. Temperiervorrichtung nach einem der Ansprüche 1 bis 8, **dadurch gekennzeichnet, dass** ein erster Speicher für das erste Temperiermedium (313) und ein zweiter Speicher für das zweite Temperiermedium (314) vorgesehen ist.

10. Temperiervorrichtung nach einem der Ansprüche 1 bis 9, **gekennzeichnet durch** eine Steuereinheit, die zur programmierten Steuerung der Temperiervorrichtung (300) eingerichtet ist.

11. Temperiervorrichtung nach Anspruch 10, **dadurch gekennzeichnet, dass** zumindest die Ventile (312, 319) der Umschalteinrichtungen (311, 315) mittels der Steuereinheit steuer- und regelbar sind.
